(19) Europäisches Patentamt / European Patent Office / Office européen des brevets

(11) **EP 4 535 066 A1**

(12) **EUROPEAN PATENT APPLICATION**
published in accordance with Art. 153(4) EPC

(43) Date of publication:
09.04.2025 Bulletin 2025/15

(21) Application number: 23811792.3

(22) Date of filing: 22.05.2023

(51) International Patent Classification (IPC):
*G02B 30/56* (2020.01)     *G02B 17/06* (2006.01)
*H04N 25/13* (2023.01)

(52) Cooperative Patent Classification (CPC):
G02B 17/06; G02B 30/56; H04N 25/13

(86) International application number:
PCT/JP2023/019034

(87) International publication number:
WO 2023/228920 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.05.2022 JP 2022087246

(71) Applicant: Kyocera Corporation
Kyoto-shi, Kyoto 612-8501 (JP)

(72) Inventors:
• SHIMOSE, Kazuki
Kyoto-shi, Kyoto 612-8501 (JP)
• KAWANISHI, Hiroyoshi
Kyoto-shi, Kyoto 612-8501 (JP)

(74) Representative: TBK
Bavariaring 4-6
80336 München (DE)

(54) **AERIAL IMAGE DISPLAY DEVICE**

(57) An aerial image display device includes a display including a display surface, a first concave mirror that reflects, in a direction different from a direction toward the display, image light emitted from the display surface, and a second concave mirror that reflects, in a direction different from a direction toward the first concave mirror, the image light reflected from the first concave mirror and forms an aerial image as a real image. The first concave mirror has a greater curvature than the second concave mirror. The first concave mirror has a tilt angle with respect to a first virtual plane including the display surface. The second concave mirror has a tilt angle with respect to a second virtual plane including a virtual imaging plane of the aerial image. The tilt angle of the first concave mirror is smaller than the tilt angle of the second concave mirror.

FIG. 1

# EP 4 535 066 A1

## Description

### TECHNICAL FIELD

The present disclosure relates to an aerial image display device.

### BACKGROUND OF INVENTION

A known aerial image display device is described in, for example, Patent Literature 1.

### CITATION LIST

### PATENT LITERATURE

Patent Literature 1: Japanese Unexamined Patent Application Publication No. 2011-253128

### SUMMARY

In one or more aspects of the present disclosure, an aerial image display device includes a display, a first concave mirror, and a second concave mirror. The display includes a display surface. The first concave mirror reflects, in a direction different from a direction toward the display, image light emitted from the display surface. The second concave mirror reflects, in a direction different from a direction toward the first concave mirror, the image light reflected from the first concave mirror and forms an aerial image as a real image. The first concave mirror has a tilt angle with respect to a first virtual plane including the display surface. The second concave mirror has a tilt angle with respect to a second virtual plane including a virtual imaging plane of the aerial image. The tilt angle of the first concave mirror is smaller than the tilt angle of the second concave mirror.

### BRIEF DESCRIPTION OF THE DRAWINGS

The objects, features, and advantages of the present disclosure will become more apparent from the following detailed description and the drawings.

FIG. 1 is a side view of an aerial image display device according to an embodiment of the present disclosure, illustrating its main components.
FIG. 2 is a cross-sectional view of a first concave mirror in the aerial image display device in FIG. 1, describing the curvature of the first concave mirror.
FIG. 3A is a perspective view of the aerial image display device in FIG. 1.
FIG. 3B is an enlarged perspective view of area IIIB in FIG. 3A.
FIG. 4 is a front view of an example aerial image as viewed by a user of the aerial image display device in FIG. 1.
FIG. 5 is a front view of an example aerial image as viewed by a user of an aerial image display device without the features of the aerial image display device in FIG. 1.
FIG. 6 is a front view of an example aerial image as viewed by the user of the aerial image display device in FIG. 1.

### DESCRIPTION OF EMBODIMENTS

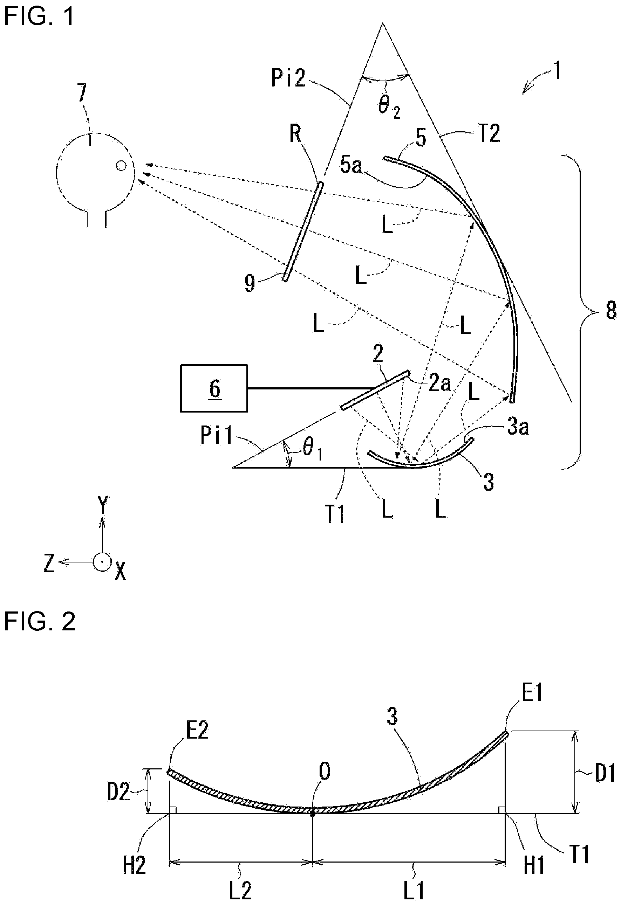

Patent Literature 1 describes an aerial image display device that forms an aerial image from image light emitted from a display device using an optical element such as a retroreflective plate and a polarizing filter.
The known areal image display device described in Patent Literature 1 may form an aerial image distorted or having lower luminance as viewed by the user. Aerial image display devices with higher display quality of aerial images are thus awaited.
One or more embodiments of the present disclosure will now be described with reference to the drawings. The drawings referred to hereafter illustrate the main components of an aerial image display device according to one or more embodiments. The display device according to one or more embodiments may include known components such as an optical element holder and a camera (both not illustrated). The drawings used hereafter are schematic and are not necessarily drawn to scale relative to the actual size of each component. Some of the drawings (e.g., FIG. 1) use an orthogonal XYZ coordinate system defined for convenience, and a positive Y-direction may be referred to as upward and a negative Y-direction as downward.

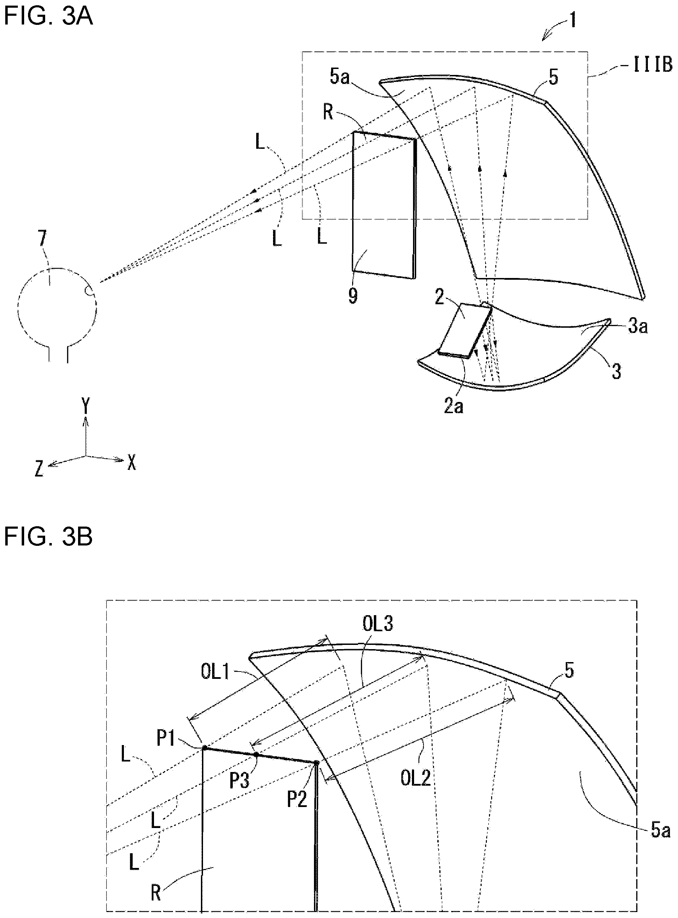

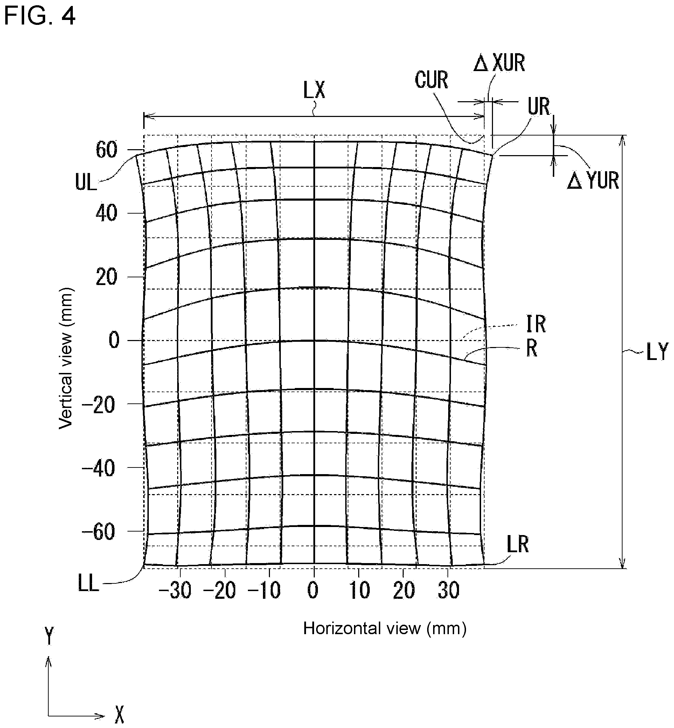

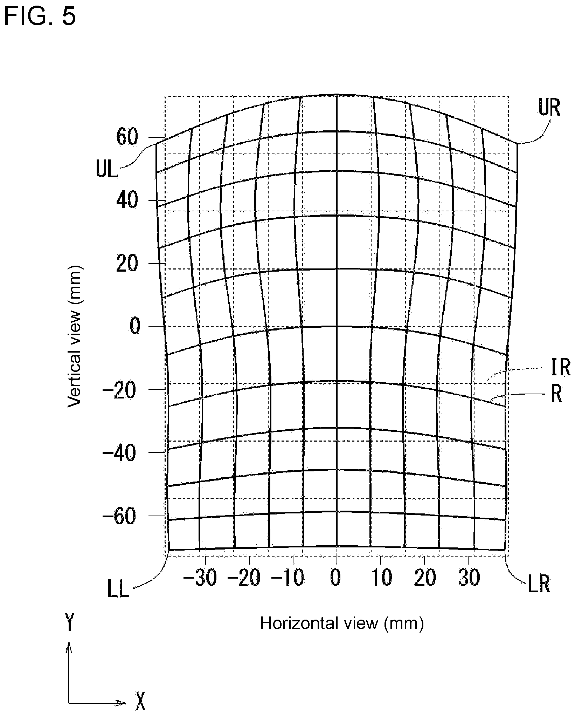

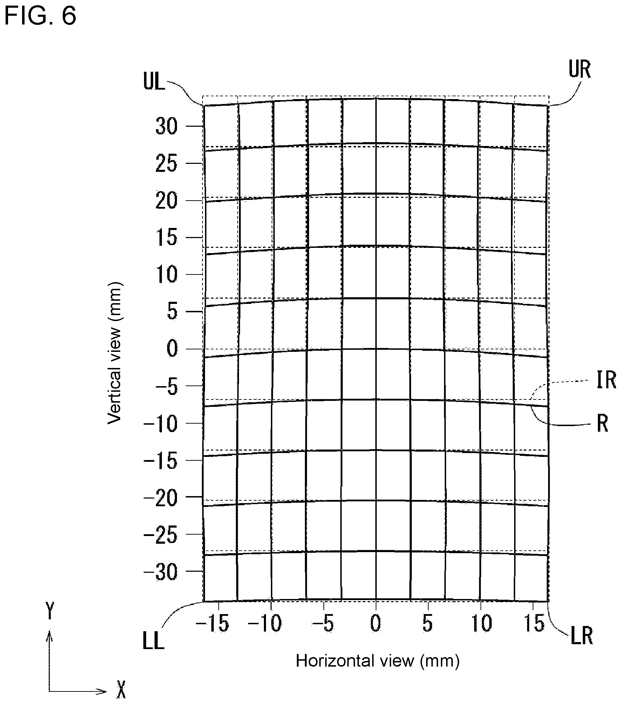

FIG. 1 is a side view of an aerial image display device according to an embodiment of the present disclosure, illustrating its main components. FIG. 2 is a cross-sectional view of a first concave mirror in the aerial image display device in FIG. 1, describing the curvature of the first concave mirror. FIG. 3A is a perspective view of the aerial image display device in FIG. 1. FIG. 3B is an enlarged perspective view of area IIIB in FIG. 3A. FIG. 4 is a front view of an example aerial image as viewed by a user of the aerial image display device in FIG. 1. FIG. 5 is a front view of an example aerial image as viewed by a user of an aerial image display device without the features of the aerial image display device in FIG. 1. FIG. 6 is a front view of an example aerial image as viewed by the user of the aerial image display device in FIG. 1.

In the present embodiment, as illustrated in FIG. 1, an aerial image display device 1 includes a display (also referred to as a display device) 2, a first concave mirror 3, and a second concave mirror 5.

The display device 2 includes a display surface 2a and displays an image that propagates as image light L on the display surface 2a. In other words, the display device 2 emits the image light L from the display surface 2a.

As illustrated in FIG. 1, the aerial image display device 1 includes the display device 2 including the display surface 2a, the first concave mirror 3 that reflects, in a direction different from a direction toward the display device 2, the image light L emitted from the display surface 2a, and the second concave mirror 5 that reflects, in a direction different from a direction toward the first concave mirror 3, the image light L reflected from the first concave mirror 3 and forms an aerial image R as a real image. The first concave mirror 3 has a tilt angle $\theta1$ with respect to a first virtual plane Pi1 including the display surface 2a, and the second concave mirror 5 has a tilt angle $\theta2$ with respect to a second virtual plane Pi2 including a virtual imaging plane 9 of the aerial image. The tilt angle $\theta1$ is smaller than the tilt angle $\theta2$.

The size of the first concave mirror 3 is smaller than the size of the second concave mirror 5 and closer to the size of the display surface 2a of the display device 2. In this structure, the first concave mirror 3 receives substantially the entire image light L emitted from the display surface 2a, and directs the image light L toward the second concave mirror 5 as a substantially enlarged image. The size of the first concave mirror 3 may be defined by the length of a maximum diameter (also referred to as the length of a maximum diameter in a front view) of a reflective surface 3a of the first concave mirror 3. The size of the second concave mirror 5 may be defined by the length of a maximum diameter (also referred to as the length of a maximum diameter in a front view) of a reflective surface 5a of the second concave mirror 5. The curvature of the first concave mirror 3 may be greater than the curvature of the second concave mirror 5. This structure allows the first concave mirror 3 to be located closer to the display device 2, reduces excess diffusion of the image light L reflected from the first concave mirror 3, and directs the reflected image light L toward the second concave mirror 5 as an enlarged image to be fully received by the second concave mirror 5. This reduces the loss of the image light L due to the diffusion of the image light L, allowing efficient use of the image light L. Thus, the aerial image display device 1 can have a smaller size, and can have higher display quality of the aerial image R with the image light L being less likely to have lower luminance.

The tilt angle $\theta1$ of the first concave mirror 3 with respect to the first virtual plane Pi1 including the display surface 2a is smaller than the tilt angle $\theta2$ of the second concave mirror 5 with respect to the second virtual plane Pi2 including the virtual imaging plane 9 of the aerial image. This reduces the likelihood that the tilt of the first concave mirror 3 increases the distortion of the aerial image R. When the tilt angle $\theta1$ of the first concave mirror 3 is greater, a difference in an optical path length from the display surface 2a to the virtual imaging plane 9 is likely to be greater among portions of the aerial image R. In particular, the difference in the optical path length is likely to be greater between the center and a peripheral edge of the aerial image R (each of the four corners for the aerial image R that is rectangular). This may increase the distortion of the aerial image R at the peripheral edge. In the present embodiment, the aerial image display device 1 can reduce the difference in the optical path length among the portions of the aerial image R, thus reducing the distortion of the aerial image R in a specific portion (e.g., at the peripheral edge).

The display device 2 may be transmissive. The transmissive display device may be, for example, a liquid crystal display device including a backlight and a liquid crystal panel. The backlight may be a direct backlight including multiple light sources arranged two-dimensionally on a rear surface of the liquid crystal panel. The backlight may be an edge-lit backlight including multiple light sources arranged on an outer periphery of the liquid crystal panel. The edge-lit backlight may include, for example, a lens array, a light guide plate, or a diffuser plate for uniformly irradiating the liquid crystal panel. The light sources in the backlight may be, for example, light-emitting diode (LED) elements, cold cathode fluorescent lamps, halogen lamps, or xenon lamps.

The liquid crystal panel may be a known liquid crystal panel. Examples of the known liquid crystal panel include an in-plane switching (IPS) panel, a fringe field switching (FFS) panel, a vertical alignment (VA) panel, and an electrically controlled birefringence (ECB) panel.

The display device 2 is not limited to the transmissive display device. The display device 2 may be a self-luminous display device including a light emitter such as an LED element, an organic electroluminescent (OEL) element, an organic light-emitting diode (OLED) element, or a semiconductor laser diode (LD) element.

Each of the first concave mirror 3 and the second concave mirror 5 is a reflective optical system that forms an image from the image light L emitted from the display device 2 within the view of a user 7. The first concave mirror 3 and the second concave mirror 5 may be hereafter collectively referred to as a reflective optical system 8.

The first concave mirror 3 is located on an optical path of the image light L emitted from the display device 2. The first concave mirror 3 is configured to reflect, in the direction different from the direction toward the display device 2, the image light L emitted from the display device 2. More specifically, the first concave mirror 3 adjusts its spatial position relative to the display device 2, such as its distance from the display device 2 and its tilt angle, to reflect the image light L in the direction different from the direction toward the display device 2. The first concave mirror 3 may include an adjuster for adjusting its spatial position relative to the display device 2. The adjuster may include, for example, a support such as a rod located on a rear surface of the first concave mirror 3, a shaft located on the support to rotate the support and the first concave mirror 3, and a slider to translate the support and the first concave mirror 3. The adjuster may be manually adjustable or electrically adjustable with, for example, a stepping motor.

The second concave mirror 5 is located on an optical path of the image light L reflected from the first concave mirror 3. The second concave mirror 5 reflects, in the direction different from the direction toward the first concave mirror 3, the image light L reflected from the first concave mirror 3 and forms the aerial image R as a real image. More specifically, the second concave mirror 5 adjusts its spatial position relative to the first concave mirror 3, such as its distance from the first concave mirror 3 and its tilt angle, to reflect the image light L in the direction different from the direction toward the first concave mirror 3. The second concave mirror 5 may include an adjuster for adjusting its spatial position relative to the first concave mirror 3. The adjuster may have the same structure as or a similar structure to the adjuster in the first concave mirror 3.

The first concave mirror 3 includes the reflective surface 3a. The reflective surface 3a may have a first curvature S1 and a second curvature S2. In this structure, the first curvature S1 and the second curvature S2 are defined as described below. As illustrated in FIG. 2, a plane tangent to the reflective surface 3a of the first concave mirror 3 at a vertex (also referred to as an origin of a freeform surface) O of the reflective surface 3a is referred to as a tangent plane T1. Additionally, both end points of the reflective surface 3a are referred to as a point E1 and a point E2, an intersection point between the tangent plane T1 and a vertical line extending downward perpendicularly from the point E1 to the tangent plane T1 as a point H1, and an intersection point between the tangent plane T1 and a vertical line extending downward perpendicularly from the point E2 to the tangent plane T1 as a point H2, as viewed in a cross section of the first concave mirror 3 taken along a plane through the vertex O and parallel to a direction in which the image light L propagates. A distance between the vertex O and the point H1 is referred to as a distance L1, a distance between the vertex O and the point H1 as a distance L2, a distance between the point E1 and the point H1 as a distance D1, and a distance between the point E2 and the point H2 as a distance D2. Note that the distance L1 is greater than or equal to the distance L2 in this structure. In the above structure, the first curvature S1 is defined as D1/L1, and the second curvature S2 is defined as D2/L2. Note that a maximum value of D1/L1 among the values obtained at different cross-sectional positions may be defined as the first curvature S1 when the first curvature S1 differs at the different cross-sectional positions. A maximum value of D2/L2 among the values obtained at different cross-sectional positions may also be defined as the second curvature S2 when the second curvature S2 differs at the different cross-sectional positions.

The curvature of the first concave mirror 3 may be defined by the first curvature S1 and the second curvature S2. The curvature of the first concave mirror 3 may also be defined by an average of the first curvature S1 and the second curvature S2. The curvature of the first concave mirror 3 may also be defined by a greater one of the first curvature S1 and the second curvature S2.

The second concave mirror 5 includes the reflective surface 5a. The reflective surface 5a has a third curvature S3 and a fourth curvature S4. The third curvature S3 is defined in the same manner as or in a similar manner to the first curvature S1. The fourth curvature S4 is defined in the same manner as or in a similar manner to the second curvature S2.

As illustrated in FIG. 1, the first concave mirror 3 is tilted at the tilt angle θ1 with respect to the first virtual plane Pi1 including the display surface 2a. The tilt angle θ1 is formed between the display surface 2a and the tangent plane T1 of the first concave mirror 3. As illustrated in FIG. 1, the second concave mirror 5 is tilted at the tilt angle θ2 with respect to the second virtual plane Pi2 including the virtual imaging plane 9 of the aerial image R. The tilt angle θ2 is formed between the virtual imaging plane 9 of the aerial image R and a tangent plane T2 of the second concave mirror 5. The tangent plane T2 is tangent to the reflective surface 5a at a vertex (also referred to as an origin of a freeform surface) of the second concave mirror 5.

The first virtual plane Pi1, the second virtual plane Pi2, the tangent plane T1, and the tangent plane T2 are defined in a space, but can be clearly illustrated in a design drawing displayed on, for example, a display device of a personal computer (PC) terminal using, for example, computer-aided design (CAD) program software.

In the aerial image display device 1, the curvature of the first concave mirror 3 is greater than the curvature of the second concave mirror 5, and the tilt angle θ1 is smaller than the tilt angle θ2. Note that, in the present embodiment, the curvature of the first concave mirror 3 being greater than the curvature of the second concave mirror 5 refers to the first curvature S1 being greater than the third curvature S3 and the second curvature S2 being greater than the fourth curvature S4.

As illustrated in FIGs. 3A and 3B, two points at peripheral edges of the aerial image R are referred to as a point P1 and a point P2, and the middle point of the side connecting the point P1 and the point P2 of the aerial image R as a point P3. An optical path length of the image light L from the reflective surface 5a to the point P1 is referred to as an optical path length OL1. An optical path length of the image light L from the reflective surface 5a to the point P2 is referred to as an optical path length OL2. An optical path length of the image light L from the reflective surface 5a to the point P3 is referred to as an optical path length OL3. The inventors have found that the distortion of the aerial image R as viewed by the user can be reduced, with the absolute value of a difference between the optical path length OL1 and the optical path length OL3 and the absolute value of a difference between the optical path length OL2 and the optical path length OL3 each being less than or equal to a predetermined value.

Hereafter, of the absolute value of the difference between the optical path length OL1 and the optical path length OL3 and the absolute value of the difference between the optical path length OL2 and the optical path length OL3, a greater one is referred to as an optical path length difference OPD. The inventors have found that the optical path length difference OPD can be less than or equal to a predetermined value, with the curvature of the first concave mirror 3 greater than the curvature of the second concave mirror 5 and the tilt angle $\theta 1$ smaller than the tilt angle $\theta 2$. With the curvature of the first concave mirror 3 greater than the curvature of the second concave mirror 5 and the tilt angle $\theta 1$ smaller than the tilt angle $\theta 2$, the likelihood that the image light L reflected from the first concave mirror 3 propagates toward the display device 2 is reduced, and the angle at which the image light L is incident on the first concave mirror 3 is also reduced. This is expected to reduce the distortion of the aerial image R. When the aerial image display device 1 is configured to allow the user 7 to view the aerial image R that is rectangular as illustrated in FIG. 3A, the points P1 and P2 are located at the respective ends of the upper side of the aerial image R (points at which the distortions are likely to be greatest) as illustrated in FIG. 3B. This can effectively reduce the distortion of the aerial image R. The predetermined value may be, for example, 2 mm.

Table 1

| Device No. | $\theta 1$ | $\theta 2$ | S1 | S2 | S3 | S4 | OPD |
|---|---|---|---|---|---|---|---|
| 1 | 29.64° | 37.92° | 0.22 | 0.27 | 0.18 | 0.22 | 1.38 mm |
| 2 | 30.41° | 46.82° | 0.25 | 0.16 | 0.124 | 0.117 | 0.68 mm |
| 3 | 22.79° | 37.94° | 0.24 | 0.24 | 0.15 | 0.19 | 1.92 mm |
| 4 | 24.25° | 36.67° | 0.22 | 0.22 | 0.15 | 0.19 | 1.98 mm |

Table 1 shows example combinations of the tilt angle $\theta 1$, the tilt angle $\theta 2$, the first curvature S1, the second curvature S2, the third curvature S3, and the fourth curvature S4 that can reduce the optical path length difference OPD to less than or equal to 2 mm. As shown in Table 1, with the tilt angle $\theta 1$, the tilt angle $\theta 2$, the curvature of the first concave mirror 3, and the curvature of the second concave mirror 5 designed as appropriate to have the curvature of the first concave mirror 3 greater than the curvature of the second concave mirror 5 and the tilt angle $\theta 1$ smaller than the tilt angle $\theta 2$, the optical path length difference OPD can be less than or equal to 2 mm. This reduces the distortion of the aerial image R as viewed by the user. As shown in Table 1, the tilt angle $\theta 1$ of the first concave mirror 3 may be less than or equal to about 35°, or less than or equal to about 30°. The tilt angle $\theta 2$ of the second concave mirror 5 may be less than or equal to about 50°. Note that the aerial image display device 1 corresponding to a device No. 2 includes the first concave mirror 3 and the second concave mirror 5 each having a smaller size, and is thus smaller than the aerial image display device 1 corresponding to each of a device No. 1, a device No. 3, and a device No. 4.

Additionally, the tilt angle $\theta 1$ of the first concave mirror 3 may be about 22 to 31°. The tilt angle $\theta 2$ of the second concave mirror 5 may be about 35 to 49°. With the tilt angle $\theta 1$ less than 22°, part of the image light L reflected from the first concave mirror 3 may not travel toward the second concave mirror 5 but return to the display surface 2a. With the tilt angle $\theta 1$ greater than 31°, the image light L reflected from the first concave mirror 3 may be more distorted. With the tilt angle $\theta 2$ less than 35°, the virtual imaging plane 9 of the aerial image R may be tilted with respect to a direction in which the user 7 views. With the tilt angle $\theta 2$ greater than 49°, the image light L reflected from the second concave mirror 5 may be more distorted. However, the range of each of the tilt angles $\theta 1$ and $\theta 2$ is not limited to the above, and may vary depending on factors such as the size and the shape of the display surface 2a of the display device 2, and the angle of field of the image light L (the divergence of light).

To reduce the distortion of the aerial image R to less than or equal to 10%, for example, the tilt angle $\theta 1$ may deviate by about -1.5 to +1.5°, and the tilt angle $\theta 2$ may deviate by about -1.0 to 2.0°. For example, for the devices No. 1 to 4 in table 1, the tilt angle $\theta 1$ and the tilt angle $\theta 2$ may be set in the ranges below.

Device No. 1:

$$29.64° - 1.5° < \theta 1 < 29.64° + 1.5°, \ 37.92° - 1.0° < \theta 2 < 37.92° + 2.0°$$

Device No. 2:

$$30.41° − 1.5° < θ1 < 30.41° + 1.5°, 46.82° − 1.0° < θ2 < 46.82° + 2.0°$$

Device No. 3:

$$22.79° − 1.5° < θ1 < 22.79° + 1.5°, 37.94° − 1.0° < θ2 < 37.94° + 2.0°$$

Device No. 4:

$$24.25° − 1.5° < θ1 < 24.25° + 1.5°, 36.67° − 1.0° < θ2 < 36.67° + 2.0 °C$$

In the aerial image display device 1, with the curvatures S1 and S2 of the first concave mirror 3 respectively greater than the curvatures S3 and S4 of the second concave mirror 5, the first concave mirror 3 that reflects the image light L emitted from the display device 2 toward the second concave mirror 5 can be located closer to the display device 2. This reduces a space (creates a more compact space) occupied by the display device 2 and the reflective optical system 8, thus reducing the size of the aerial image display device 1. With the size of the aerial image display device 1 reduced, the optical path length of the image light L between the display surface 2a of the display device 2 and the reflective surface 5a of the second concave mirror 5 can also be reduced, reducing the loss of the image light L due to, for example, unintended scatter or interference. The aerial image display device 1 can thus have higher display quality.

In one or more embodiments of the present disclosure as described above, the aerial image display device 1 can have a smaller size and can have higher display quality of the aerial image R.

FIG. 4 is a diagram of a result of a simulation illustrating the aerial image R as viewed by the user 7 of the aerial image display device 1. In FIG. 4, to facilitate visual understanding of the distortion of the aerial image R, the aerial image R has a lattice pattern as indicated by the coordinate axes of the distortion direction and the distortion amount. In FIG. 4, solid lines indicate the aerial image R as viewed by the user 7, and broken lines indicate an ideal aerial image IR with no distortion.

As illustrated in FIG. 4, the distortion of the aerial image R is likely to occur at the outer periphery of the aerial image R, and the distortion is likely to be greater specifically at the four corners (a lower right corner LR, an upper right corner UR, a lower left corner LL, and an upper left corner UL) of the aerial image R. Table 2 shows the distortions of the aerial image R in FIG. 4 at the corners LR, UR, LL, and UL with respect to the ideal aerial image IR. As shown in Table 2, the aerial image display device 1 reduces the distortion at each of the corners LR, UR, LL, and UL to within ±7%.

Table 2

|  | X-component | Y-component |
|---|---|---|
| LR | 0.1% | -0.6% |
| UR | 1.5% | -6.4% |
| LL | 0.1% | -0.6% |
| UL | 1.5% | -6.4% |

Note that a positive X-direction corresponds to rightward in FIG. 4, and a negative X-direction corresponds to leftward in FIG. 4. A positive Y-direction corresponds to upward in FIG. 4, and a negative Y-direction corresponds to downward in FIG. 4. Also note that, in each of an X-direction and a Y-direction in Table 1, the distortion is indicated with a positive value when the aerial image R is distorted outward from the ideal aerial image IR, and the distortion is indicated with a negative value when the aerial image R is distorted inward from the ideal aerial image IR. For example, with respect to the lower right corner LR, the positive X-direction is outward (rightward or an expanding direction) in the X-direction, the negative X-direction is inward (leftward or a contracting direction) in the X-direction, the positive Y-direction is outward (downward or an expanding direction) in the Y-direction, and the negative Y-direction is inward (upward or a contracting direction) in the Y-direction. This also applies to the upper right corner UR, the lower left corner LL, and the upper left corner UL. This also applies to the tables below each showing the distortions of the aerial image R.

The distortions at the corners LR, UR, LL, and UL are calculated as described below. The distortion in the X-direction at each of the corners LR, UR, LL, and UL is defined as a deviation length in the X-direction from a length LX of an upper side (a lower side has the same length as the upper side) of the ideal aerial image IR that is rectangular. The lower side of the ideal aerial image IR has the same length as the length LX of the upper side, and thus the length LX of the upper side is used as a reference length. For example, the distortion in the X-direction at the corner UR is defined as a deviation length ΔXUR in the X-direction from the length LX of the upper side with respect to an upper right corner CUR of the ideal aerial image IR. More specifically, the distortion in the X-direction at the corner UR is defined as (ΔXUR/LX) × 100 (%). The aerial image R is distorted outward from the ideal aerial image IR at the corner UR in the X-direction. The distortion at the corner UR is thus indicated with a positive value. The distortions in the X-direction at the corners LR, LL, and UL are defined in the same manner as or in a similar manner to the above. For the ideal aerial image IR that is other than rectangular, the reference length in the X-direction may be an average length or a maximum length in the X-direction.

The distortion in the Y-direction at each of the corners LR, UR, LL, and UL is defined as a deviation length in the Y-direction from a length LY of a right side (a left side has the same length as the right side) of the ideal aerial image IR that is rectangular. The left side of the ideal aerial image IR has the same length as the length LY of the right side, and thus the length LY of the right side is used as a reference length. For example, the distortion in the Y-direction at the corner UR is defined as a deviation length $\Delta$YUR in the Y-direction from the length LY of the right side with respect to the upper right corner CUR of the ideal aerial image IR. More specifically, the distortion in the Y-direction at the corner UR is defined as ($\Delta$YUR/LY) $\times$ 100 (%). The aerial image R is distorted inward from the ideal aerial image IR at the corner UR in the Y-direction. The distortion at the corner UR is thus indicated with a negative value. The distortions in the Y-direction at the corners LR, LL, and UL are defined in the same manner as or in a similar manner to the above. For the ideal aerial image IR that is other than rectangular, the reference length in the Y-direction may be an average length or a maximum length in the Y-direction.

FIG. 5 is a diagram of a result of the simulation illustrating the aerial image R as viewed by a user of an aerial image display device that does not include the features of the aerial image display device 1 and has the optical path length difference OPD greater than 2 mm. In FIG. 5, solid lines indicate the aerial image R as viewed by the user 7, and broken lines indicate the ideal aerial image IR with no distortion. Table 3 shows the distortions of the aerial image R in FIG. 5 at the corners LR, UR, LL, and UL with respect to the ideal aerial image IR.

Table 3

|  | X-component | Y-component |
|---|---|---|
| LR | -0.2% | -1.8% |
| UR | 3.5% | -19.4% |
| LL | -0.2% | -1.8% |
| UL | 3.5% | -19.4% |

As shown in Table 3, with the optical path length difference OPD greater than or equal to 2 mm, the distortion of the aerial image R is greater at each of the four corners, and a Y-component of the distortion is particularly greater at the upper right corner UR and the upper left corner UL.

As described above, the aerial image display device 1 can reduce the distortion of the aerial image R as viewed by the user 7. Thus, the aerial image display device 1 can have higher display quality of the aerial image.

Table 4

|  | X-component | Y-component |
|---|---|---|
| LR | -0.9% | -0.6% |
| UR | -0.3% | -2.7% |
| LL | -0.9% | -0.6% |
| UL | -0.3% | -2.7% |

FIG. 6 is a diagram of a result of the simulation illustrating the aerial image R as viewed by the user 7 of the aerial image display device 1 with a smaller size. The smaller aerial image display device 1 is the aerial image display device 1 corresponding to the device No. 2 in Table 1. In FIG. 6, solid lines indicate the aerial image R as viewed by the user 7, and broken lines indicate the ideal aerial image IR with no distortion.

As illustrated in FIG. 6, the distortion of the aerial image R is likely to occur at the outer periphery of the aerial image R, and the distortion is likely to be greater specifically at the four corners (the lower right corner LR, the upper right corner UR, the lower left corner LL, and the upper left corner UL) of the aerial image R. Table 4 shows the distortions of the aerial image R in FIG. 6 at the corners LR, UR, LL, and UL with respect to the ideal aerial image IR. As shown in Table 4, the aerial image display device 1 reduces the distortion at each of the corners LR, UR, LL, and UL to within $\pm$3%. As described above, the aerial image display device 1 with a smaller size can reduce the distortion of the aerial image R.

The aerial image display device 1 includes the reflective optical system 8 including the first concave mirror 3 and the second concave mirror 5 to display the aerial image R. Thus, with each of the reflective surface 3a of the first concave mirror 3 and the reflective surface 5a of the second concave mirror 5 having an appropriately designed shape, the distortion of the aerial image R can be reduced. In the aerial image display device 1, the reflective optical system 8 includes no optical element (e.g., a beam splitter or a polarizing filter) for transmitting part of the incident image light L. The aerial image R is thus less likely to have lower luminance. When, for example, the reflective optical system 8 includes a beam splitter on its optical axis, the beam splitter separates about half of the image light L, possibly reducing the luminance of the aerial image R to about half. The aerial image display device 1 can reduce the likelihood that the aerial image R has lower luminance. The aerial image display device 1 can also reduce the luminance of the image on the display surface 2a while sufficiently maintaining the luminance of the aerial image R. This can reduce power consumption of the aerial image display device 1.

The aerial image display device 1 includes a controller 6 as illustrated in FIG. 1. The controller 6 is connected to each of the components of the aerial image display device 1 to control the components. The components controlled by the controller 6 include the display device 2.

The controller 6 may have the function of adjusting the adjuster described above. The controller 6 may also have the functions of, for example, turning on and off the display device 2, transmitting an image signal to the display device 2, and adjusting the luminance, chromaticity, or frame frequency of images. For the display device 2 including a heat dissipator or a cooling member, the controller 6 may have the function of adjusting the temperature of the heat dissipator or the cooling member.

The controller 6 may include one or more processors. The processors may include a general-purpose processor configured to read a specific program to perform a specific function and a processor dedicated to specific processing. The dedicated processor may include an application specific integrated circuit (ASIC). The processor may include a programmable logic device (PLD). The PLD may include a field-programmable gate array (FPGA). The controller 6 may be a system on a chip (SoC) or a system in a package (SiP) configured to cause one or more processors to cooperate with one another.

The aerial image display device 1 may include the second concave mirror 5 with a larger size (e.g., a larger diameter) than the first concave mirror 3. This structure facilitates display of the aerial image R that is enlarged. In other words, the second concave mirror 5 can easily reflect, toward the virtual imaging plane 9 of the aerial image R, the light flux of image light L with an enlarged diameter reflected from the first concave mirror 3. For the second concave mirror 5 with a relatively larger size, the reflective surface 5a can easily be shaped to correspond to each of multiple partial light beams included in the image light L. This effectively reduces the distortion of the aerial image R.

The size of the first concave mirror 3 may be defined by the length of the maximum diameter of the reflective surface 3a of the first concave mirror 3. The size of the second concave mirror 5 may be defined by the length of the maximum diameter of the reflective surface 5a of the second concave mirror 5. For the first concave mirror 3 including a partially spherical surface, for example, the reflective surface 3a of the first concave mirror 3 is circular in a front view. In this case, the size of the first concave mirror 3 may be the sum of the distance L1 and the distance L2 (refer to FIG. 2). For the first concave mirror 3 including a partially elliptic surface, the reflective surface 3a of the first concave mirror 3 is elliptic in a front view. In this case, the size of the first concave mirror 3 may correspond to the length of a major diameter selected from the line segments including the center of the reflective surface 3a and connecting both the ends E1 and E2 of the reflective surface 3a. For the reflective surface 3a of the first concave mirror 3 that is rectangular in a front view, the size of the first concave mirror 3 may correspond to a maximum length (e.g., the length of a diagonal) selected from the line segments including the center of the reflective surface 3a and connecting both the ends E1 and E2 of the reflective surface 3a. Note that the center of the reflective surface 3a is defined by the lowest point (a maximum protruding point) of the curved reflective surface 3a. The size of the second concave mirror 5 is defined in the same manner as or in a similar manner to the first concave mirror 3. The first concave mirror 3 may have a size of, for example, about 150 to 200 mm. The second concave mirror 5 may have a size of, for example, about 200 to 350 mm.

The size of the first concave mirror 3 may be defined by the area of the reflective surface 3a of the first concave mirror 3 or by the area of the reflective surface 3a of the first concave mirror 3 in a front view. The size of the second concave mirror 5 may be defined by the area of the reflective surface 5a of the second concave mirror 5 or by the area of the reflective surface 5a of the second concave mirror 5 in a front view.

The first concave mirror 3 may be a freeform concave mirror including the reflective surface 3a as a freeform surface. The second concave mirror 5 may be a freeform concave mirror including the reflective surface 5a as a freeform surface. For the first concave mirror 3 and the second concave mirror 5 respectively including the reflective surface 3a and the reflective surface 5a as a freeform surface, the reflective surface 3a and the reflective surface 5a can easily be shaped to effectively reduce the distortion of the aerial image R.

This effectively reduces the distortion of the aerial image R.

Each of the reflective surfaces 3a and 5a as a freeform surface may be an XY polynomial surface (also referred to as an SPS XYP surface) defined by Formulas 1 and 2 below. The XY polynomial surface is expressed by polynomials until the tenth degree to be added to a conic reference surface. In Formulas 1 and 2, the sum of m and n is thus less than or equal to 10. In Formula 1, z is an amount of sag of a surface parallel to a z-axis (optical axis), c is a vertex curvature, r is a distance in a radial direction (more specifically, $r^2 = x^2 + y^2$), k is a conic constant, and $C_j$ is a coefficient of a monomial $x^m y^n$.

$$z = \frac{cr^2}{1 + \sqrt{1 - (1 + k)c^2 r^2}} + \sum_{j=2}^{66} C_j x^m y^n \qquad (1)$$

$$j = \frac{(m + n)^2 + m + 3n}{2} + 1 \qquad (2)$$

The freeform concave mirror may be formed by, for example, cutting a surface of a plate of a metal such as aluminum (Al) to be a freeform concave surface with a method such as cutting using numerical control by a computer.

The aerial image display device 1 may be configured to allow the image light L reflected from the first concave mirror 3 to propagate through a space between the first concave mirror 3 and the second concave mirror 5. More specifically, as illustrated in FIG. 1, the optical path of the image light L between the first concave mirror 3 and the second concave mirror 5 may be an optical path for propagation through a space with no other optical member. This structure reduces the loss of the image light L on the optical path between the first concave mirror 3 and the second concave mirror 5. The aerial image R is thus less likely to have lower luminance. This structure can also reduce the luminance of the image on the display surface 2a while sufficiently maintaining the luminance of the aerial image R. This can reduce power consumption of the aerial image display device 1.

The second concave mirror 5 may overlap the display device 2 and the first concave mirror 3 when viewed from the rear surface of the second concave mirror 5 in a direction parallel to the virtual imaging plane 9 of the aerial image R (substantially the Y-direction in FIG. 1). This structure reduces the space occupied by the display device 2 and the reflective optical system 8, thus reducing the size of the aerial image display device 1. This reduces the optical path length of the image light L inside the aerial image display device 1, and thus reduces the loss of the image light L due to, for example, unintended scatter or interference. The aerial image display device 1 can thus have higher display quality. The reflective surface 5a of the second concave mirror 5 may overlap the display surface 2a of the display device 2 and the reflective surface 3a of the first concave mirror 3. More specifically, the positional relationship between the components of the reflective optical system 8 directly associated with the optical path may be defined.

A viewer views the aerial image R in a direction substantially orthogonal to the virtual imaging plane 9 of the aerial image R. The direction parallel to the virtual imaging plane 9 of the aerial image R thus corresponds to a height direction of the aerial image display device 1. The direction orthogonal to the virtual imaging plane 9 of the aerial image R corresponds to a thickness direction (depth direction) of the aerial image display device 1. This structure can reduce at least the thickness (depth) of the aerial image display device 1.

The second concave mirror 5 may include the display device 2 and the first concave mirror 3 when viewed from the rear surface of the second concave mirror 5 in the direction parallel to the virtual imaging plane 9 of the aerial image R (substantially the Y-direction in FIG. 1). This structure reduces the space occupied by the display device 2 and the reflective optical system 8, thus further reducing the size of the aerial image display device 1. This further reduces the optical path length of the image light L inside the aerial image display device 1, and thus effectively reduces the loss of the image light L due to, for example, unintended scatter or interference. The aerial image display device 1 can thus effectively have higher display quality. The reflective surface 5a of the second concave mirror 5 may include the display surface 2a of the display device 2 and the reflective surface 3a of the first concave mirror 3. More specifically, the positional relationship between the components of the reflective optical system 8 directly associated with the optical path may be defined. This structure can reduce at least the thickness (depth) of the aerial image display device 1.

The aerial image display device 1 may be mounted on a movable body, such as a car, a vessel, or an aircraft, or in other words, a vehicle on which the user boards. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. The vehicle may include a human-powered vehicle. Examples of the vessel include a jet ski, a boat, and a tanker. Examples of the aircraft include a fixed-wing aircraft and a rotary-wing aircraft. The aerial image display device 1 may be located in a dashboard of the movable body.

The movable body including the aerial image display device 1 allows the user (e.g., a driver of the movable body) to view the aerial image R having less distortion, higher luminance, and a higher contrast ratio. The aerial image R may include information about a state (e.g., speed, acceleration, or a posture) of the movable body, and surroundings of the movable body.

The aerial image display device 1 may be a head-up display to be installed in a vehicle. In this case, for example, a part of a front windshield in the vehicle may be a reflector. The reflector may be used as the second concave mirror 5. The reflector may allow the user to view the aerial image R. The reflector may be a semi-transmissive reflector (a reflector for transmitting about half of light and reflecting about another half of the light).

In the longitudinal sectional view illustrated in FIG. 1, the aerial image display device 1 may include the display device 2 between the first concave mirror 3 and the second concave mirror 5 when viewed laterally. In other words, the first concave mirror 3 may be located lowermost, and the second concave mirror 5 may be located uppermost. In this case, the aerial image display device 1 can easily be less tall and be smaller.

In the aerial image display device 1 illustrated in FIG. 1, the display device 2 may be located not to overlap (in other words, not to block) the image light L. This structure reduces the likelihood of the display device 2 obstructing the aerial image R, or for example, causing a part of the aerial image R to be missing or to be dark. The distance (shortest distance) between the display device 2 and the image light L closest to the display device 2 may be greater than or equal to 2 mm or may be greater than or equal to 10 mm, but is not limited to these ranges.

In the aerial image display device 1 illustrated in FIG. 1, the first concave mirror 3 may be included in a curved space (also referred to as a three-dimensional space) including the second concave mirror 5 extending in the space. In this case, the reflective optical system 8 and the aerial image display device 1 are smaller. The display device 2 and the first concave mirror 3 may be included in the curved space. In this case, the reflective optical system 8 and the aerial image display device 1 are still smaller.

The aerial image display device 1 may include a camera that captures an image of the face of the user 7. The camera may be an infrared camera or a visible light camera. The camera may include a CCD image sensor or a CMOS image sensor. The controller 6 may detect the positions of the eyes of the user 7 based on captured image data output from the camera. The controller 6 may deform the image displayed on the display surface 2a based on the detected positions of the eyes. This structure can reduce the distortion of the aerial image R when the positions of the eyes of the user 7 are moved. For the aerial image display device 1 mounted on a movable body, the camera may be attached to the movable body. The camera may be located, for example, in the dashboard or on the dashboard of the movable body.

The aerial image display device 1 may include a drive for moving at least one of the first concave mirror 3 or the second concave mirror 5 in the reflective optical system 8. The drive may include the adjuster described above. The controller 6 may move at least one of the first concave mirror 3 or the second concave mirror 5 based on the detected positions of the eyes. This structure can reduce the distortion of the aerial image R when the positions of the eyes of the user 7 are moved. The drive may include, for example, a motor and a piezoelectric element.

Although the embodiments of the present disclosure have been described in detail, the present disclosure is not limited to the embodiments described above, and may be changed or varied in various manners without departing from the spirit and scope of the present disclosure.

The aerial image display device according to one or more embodiments of the present disclosure can have higher display quality of the aerial image.

The structure according to one or more embodiments of the present disclosure may have aspects (1) to (8) described below.

    (1) An aerial image display device, comprising:

        a display including a display surface;
        a first concave mirror configured to reflect, in a direction different from a direction toward the display, image light emitted from the display surface; and
        a second concave mirror configured to reflect, in a direction different from a direction toward the first concave mirror, the image light reflected from the first concave mirror and form an aerial image as a real image,
        wherein the first concave mirror has a greater curvature than the second concave mirror, the first concave mirror has a tilt angle with respect to a first virtual plane including the display surface, the second concave mirror has a tilt angle with respect to a second virtual plane including a virtual imaging plane of the aerial image, and the tilt angle of the first concave mirror is smaller than the tilt angle of the second concave mirror.

    (2) The aerial image display device according to (1), wherein
    the second concave mirror includes a reflective surface having a greater maximum diameter than a reflective surface of the first concave mirror.
    (3) The aerial image display device according to (1) or (2), wherein
    the first concave mirror has a greater curvature than the second concave mirror.
    (4) The aerial image display device according to any one of (1) to (3), wherein
    each of the first concave mirror and the second concave mirror is a freeform concave mirror.
    (5) The aerial image display device according to any one of (1) to (4), wherein
    the tilt angle of the first concave mirror is less than or equal to 35 degrees, and the tilt angle of the second concave mirror is less than or equal to 50 degrees.
(6) The aerial image display device according to any one of (1) to (5), wherein
the first concave mirror is configured to reflect the image light to propagate only through a space between the first concave mirror and the second concave mirror.
(7) The aerial image display device according to any one of (1) to (6), wherein
the second concave mirror overlaps the display and the first concave mirror when the first concave mirror is viewed from a rear surface of the second concave mirror in a direction parallel to the virtual imaging plane.
(8) The aerial image display device according to any one of (1) to (6), wherein
the second concave mirror includes the display and the first concave mirror when the first concave mirror is viewed from a rear surface of the second concave mirror in a direction parallel to the virtual imaging plane.

INDUSTRIAL APPLICABILITY

In the embodiments of the present disclosure, the aerial image display device allows an operation of aerial images without touching, and may be used in, but not limited to, products in various fields described below. Examples of such products include a communication device for communication or conversations using aerial images, a medical interview device that allows doctors to interview patients using aerial images, a navigation device and a driving control device for vehicles such as automobiles, an order reception and registration device used in, for example, shops, an operational panel used in, for example, buildings or elevators, a learning device for teaching or learning classes using aerial images, an office device for business communication or instructions using aerial images, a gaming device used for playing games using aerial images, a projector for projecting images on the ground or walls in, for example, amusement parks or game arcades, a simulation device for simulation using aerial images in, for example, universities or medical organizations, a large display for displaying prices and other information in, for example, markets or stock exchanges, and an imaging viewing device used for viewing aerial images.

REFERENCE SIGNS

1     aerial image display device
2     display (display device)
2a    display surface
3     first concave mirror
3a    reflective surface
5     second concave mirror
5a    reflective surface
6     controller
7     user
8     reflective optical system
9     virtual imaging plane
R    aerial image

**Claims**

1. An aerial image display device, comprising:

   a display including a display surface;
   a first concave mirror configured to reflect, in a direction different from a direction toward the display, image light emitted from the display surface; and
   a second concave mirror configured to reflect, in a direction different from a direction toward the first concave mirror, the image light reflected from the first concave mirror and form an aerial image as a real image,
   wherein the first concave mirror has a tilt angle with respect to a first virtual plane including the display surface, the second concave mirror has a tilt angle with respect to a second virtual plane including a virtual imaging plane of the aerial image, and the tilt angle of the first concave mirror is smaller than the tilt angle of the second concave mirror.

2. The aerial image display device according to claim 1, wherein
the second concave mirror includes a reflective surface having a greater maximum diameter than a reflective surface of the first concave mirror.

3. The aerial image display device according to claim 1 or claim 2, wherein
the first concave mirror has a greater curvature than the second concave mirror.

4. The aerial image display device according to any one of claims 1 to 3, wherein
each of the first concave mirror and the second concave mirror is a freeform concave mirror.

5. The aerial image display device according to any one of claims 1 to 4, wherein
the tilt angle of the first concave mirror is less than or equal to 35 degrees, and the tilt angle of the second concave mirror is less than or equal to 50 degrees.

6. The aerial image display device according to any one of claims 1 to 5, wherein
the first concave mirror is configured to reflect the image light to propagate only through a space between the first concave mirror and the second concave mirror.

7. The aerial image display device according to any one of claims 1 to 6, wherein
the second concave mirror overlaps the display and the first concave mirror when the first concave mirror is viewed from a rear surface of the second concave mirror in a direction parallel to the virtual imaging plane.

8. The aerial image display device according to any one of claims 1 to 6, wherein
the second concave mirror includes the display and the first concave mirror when the first concave mirror is viewed from a rear surface of the second concave mirror in a direction parallel to the virtual imaging plane.

**FIG. 1**

**FIG. 2**

FIG. 3A

FIG. 3B

FIG. 4

FIG. 5

FIG. 6

## INTERNATIONAL SEARCH REPORT

| International application No. |
|---|
| **PCT/JP2023/019034** |

| A. | CLASSIFICATION OF SUBJECT MATTER |
|---|---|

*G02B 30/56*(2020.01)i; *G02B 17/06*(2006.01)i; *H04N 25/13*(2023.01)i
FI:    G02B30/56; H04N25/13; G02B17/06

According to International Patent Classification (IPC) or to both national classification and IPC

| B. | FIELDS SEARCHED |
|---|---|

Minimum documentation searched (classification system followed by classification symbols)

G02B30/56; G02B17/06; H04N25/13

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2015/0042958 A1 (WAVLEN, INC.) 12 February 2015 (2015-02-12)<br>fig. 8-10, 18-20 | 1-8 |
| A | JP 2004-117780 A (SAMII KK) 15 April 2004 (2004-04-15)<br>fig. 4, 8 | 1-8 |
| A | JP 2002-511596 A (HOLO-GONE, LLC) 16 April 2002 (2002-04-16)<br>fig. 6 | 1-8 |
| A | US 5311357 A (SUMMER, Susan K.) 10 May 1994 (1994-05-10)<br>fig. 1, 4, 5 | 1-8 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/019034**

| Patent document<br>cited in search report | | | Publication date<br>(day/month/year) | Patent family member(s) | | | Publication date<br>(day/month/year) |
|---|---|---|---|---|---|---|---|
| US | 2015/0042958 | A1 | 12 February 2015 | WO | 2015/021116 | A1 | |
| | | | | TW | 201514543 | A | |
| JP | 2004-117780 | A | 15 April 2004 | (Family: none) | | | |
| JP | 2002-511596 | A | 16 April 2002 | US<br>fig. 6 | 6497484 | B1 | |
| | | | | WO | 1999/053346 | A2 | |
| | | | | EP | 1071975 | A4 | |
| | | | | AU | 3494699 | A | |
| | | | | CA | 2328170 | A | |
| US | 5311357 | A | 10 May 1994 | JP | 6-509885 | A | |
| | | | | WO | 1993/015431 | A1 | |
| | | | | EP | 577829 | A1 | |
| | | | | DE | 4202303 | A | |
| | | | | AU | 3452193 | A | |
| | | | | CA | 2107127 | A | |

Form PCT/ISA/210 (patent family annex) (January 2015)

**EP 4 535 066 A1**

**Patent documents cited in the description**

- JP 2011253128 A